# EUROPÄISCHE PATENTSCHRIFT

(11) **EP 1 820 590 B1**
(45) Veröffentlichungstag und Bekanntmachung des Hinweises auf die Patenterteilung: **01.05.2013**
(21) Anmeldenummer: 07101289.2
(22) Anmeldetag: 29.01.2007
(51) Int. Cl.: B23D 43/02, B23H 9/00

(54) **Verfahren zur Herstellung von Räumwerkzeugen**
Method for manufacturing broaching tools
Procédé destiné à la fabrication de broches

(30) Priorität: 21.02.2006 DE 102006008031
(43) Veröffentlichungstag der Anmeldung: 22.08.2007
(73) Patentinhaber: Noliac A/S, 3490 Kvistgaard (DK)
(72) Erfinder: Heinzl, Joachim, 81549, Muenchen (DE); Liess, Helmar, 80939, München (DE); Schwebel, Tim, 80337, München (DE); Wallenhauer, Carsten, 01987, Schwarzheide (DE); Gottlieb, Bernhard, 81739, München (DE); Kappel, Andreas, 85649, Brunnthal (DE)
(74) Vertreter: Hertling, Peter

(56) Entgegenhaltungen:
- EP-A1- 1 454 079
- DE-A1- 2 819 697
- GB-A- 1 561 427
- US-A- 3 851 540
- DATABASE WPI Week 199212 Derwent Publications Ltd., London, GB; AN 1992-095119 XP002481385 -& SU 1 657 293 A (CORRESP POLY) 23. Juni 1991 (1991-06-23)

## Beschreibung

Die Erfindung betrifft ein Verfahren zur Herstellung von Vollprofil-Räumwerkzeuge für die Fertigung von innen- oder außen liegender Mikroverzahnung mit Zahnmodulen < 0,1 mm.

Im Allgemeinen werden Verzahnungen ab einem Zahnmodul von < 1 mm bzw. zwischen 0,1 mm bis 1 mm, als feinwerktechnische Verzahnungen bzw. Mikroverzahnungen bezeichnet (DIN 58400). An dieser Stelle soll die Vielzahl von weiteren Verfahren zur Herstellung von Mikroverzahnungen, vor allem die urformenden Verfahren, beispielsweise Mikrospritzguss, nicht berücksichtigt werden, da die resultierenden Mikroverzahnungen in eine andere Leistungsklasse einzuordnen sind.

Betrachtet werden feinwerktechnische Verzahnungen, welche möglichst durch kostengünstige Verfahren mit bestimmter Schneide, wie zum Beispiel durch Wälzfräsen, Wälzstoßen, Räumen etc. in zumeist hochfesten und nicht gehärteten, weichen Materialien eingebracht werden. Verfahren mit unbestimmter Schneide, wie zum Beispiel Wälzschleifverfahren, werden insbesondere für die Herstellung von Verzahnungen in gehärteten Materialien verwendet. Derartige konventionelle Verfahren werden für Zahnmodule bis ca. 0,4 mm eingesetzt. Auf Sondermaschinen können auch Zahnmodule bis zu 0,1 mm gefertigt werden. Dabei muss jedoch zwischen Innen- bzw. Außenverzahnungen unterschieden werden. Im Falle von Innenverzahnungen sind beispielsweise die Durchmesser bei Wälzverfahren auf minimal ca. 20 mm limitiert.

Zur Fertigung von Mikroverzahnungen mit besonders großen Stückzahlen werden beispielsweise Räumverfahren nach DIN 8589, Teil 5 bis zu kleinsten Zahnmodulen von m = 0,1 mm eingesetzt. Insbesondere für Innenverzahnungen mit Durchmesser < 20 mm werden Innenprofil-Räumverfahren verwendet, die jedoch als Teilverfahren angelegt sind.

Vollprofil-Räumwerkzeuge fertigen komplette Verzahnungsgeometrien in einem Arbeitsgang. Um keinen umlaufenden Span beim Räumen zu erzeugen werden Vollprofil-Räumwerkzeuge mit zueinander versetzten Spanbrechernuten versehen.

Im Gegensatz zu Vollprofil-Räumwerkzeugen können Verzahnungsprofile im Teilverfahren in mehreren Arbeitsschritten entstehen. In einem Arbeitsschritt wird dabei nur ein Zahn geräumt. Diese Verfahren werden im Wesentlichen aufgrund des einfacheren Werkzeugs bevorzugt eingesetzt. Abhängig von der zu erzielenden Stückzahl und der Standzeit wird jedoch ein sequentielles Fertigungsverfahren in der Regel kostenintensiver werden, als ein Vollprofilverfahren.

Räumverfahren werden bisher nur für das so genannte Innenräumen verwendet da das entsprechende, dann zwangsweise mehrteilige, Außenprofil-Räumwerkzeug mit innen liegenden Schneiden sehr aufwändig herzustellen ist.

Die Problematik bei Vollprofil-Räumwerkzeugen liegt vor allem im Aufbringen des Profils auf die Schneiden des Räumwerkzeugs. Während ein Innenprofil-Räumwerkzeug, mit außen liegenden Schneiden, durch Wälzschleifverfahren strukturiert werden kann, ist dies bei einem Außenprofil-Räumwerkzeug, mit innen liegenden Schneiden, nicht bzw. nur für größere Durchmesser ab ca. 20 mm möglich.

Bekannte Drahterosionsverfahren sind prinzipiell zur Strukturierung von geschlossenen Innen- und Außenkonturen geeignet. Allerdings sind damit Räumwerkzeughöhen, je nach Drahtstärke und daraus resultierend die kleinsten herstellbaren Radien auf Strukturen im Millimeterbereich begrenzt. Bei Verwendung von Drahtstärken beim Erodierverfahren von 0 20 µm, reduziert sich die herstellbare Bauteilhöhe z.B. auf ca. 3 mm.

Durch die Verwendung eines Senk-Erodierverfahrens wird die Problematik auf die Elektrodenherstellung verschoben, aber nicht gelöst.

Ein Drahterodierverfahren kann für die Herstellung von Mikroverzahnungen mit kleinen Zahnmodulen verwendet werden. In der Uhrenindustrie wird dies beispielsweise eingesetzt. Diese Verfahren sind jedoch sehr zeit- und kostenintensiv und kommen deshalb nur für Güter im Luxussegmentbereich zum Einsatz.

Aus der Halbleiterindustrie bekannte Verfahren, wie zum Beispiel das LIGA-Verfahren (Lithographie und Galvanoabformung) werden für die Fertigung von Mikroverzahnungen auch von kleinen Zahnmodulen, bis hinab zu 0,1 mm verwendet. Der bekannteste Vertreter, der durch diese Technik hergestellt wird ist das Micro-Harmonic-Drive Getriebe.

Beim LIGA-Verfahren werden photosensitive Polymerschichten über eine Maske mit einer harten Röntgenstrahlung, wie sie ein Synchotron liefert, belichtet. Anschließend können die bestrahlten Bereiche mit einem Lösungsmittel entfernt werden. In einem folgenden Galvanikprozess können Bauteile bis zu einer maximalen Verzahnungslänge von nicht viel mehr als 1 mm aufgebaut werden. Für die Drahterosion einer Mikroverzahnung wird beispielsweise immer 1 Stunde benötigt, unabhängig von der Stückzahl.

Die Herstellung eines Masters ist durch die dafür nötigen Belichtungsapparaturen aus der Halbleiterindustrie technologisch extrem aufwändig und teuer. Obwohl in einem parallelen Batch-Prozess, je nach Größe, immer mehrere Bauteile gleichzeitig aufgebaut werden können ist der Fertigungsprozess zeit- und kostenintensiv. Aufgrund des galvanischen Aufbauprozesses können zudem nur galvanisch abscheidbare Materialien verwendet werden. Dadurch wird das einsetzbare Spektrum an hochfesten Materialien, wie Stählen oder Ähnlichem, extrem eingeengt.

Aus der US-A-3851540 ist die Verwendung von Mikroverzahnungen für ein Stirnrad bekannt, welches insbesondere für den Einsatz zwischen Wellen und einem Tellerrad dient. Die dort beschriebene Verzahnung ist relativ einfach herstellbar und nicht mit einer Mikroverzahnung und einem Verfahren zur Herstellung von Räumwerkzeugen in Einklang zu bringen.

Die DE 28 19 697 A1 offenbart ein Verfahren zur Herstellung von Räumwerkzeugen mittels Funkenerosion unter Verwendung einer Elektrode.

Der Erfindung liegt die Aufgabe zugrunde ein Verfahren bereitzustellen, welches es ermöglicht ein Räumwerkzeug zu strukturieren mit dem sowohl kleinste Zahnmodule mit m < 0,1 mm, als auch große Verzahnungslängen in hochfesten Stählen gefertigt werden können. Damit soll gleichzeitig die Fertigung von Mikroverzahnungen in großen Stückzahlen ermöglicht werden.

Die Erfindung wird durch die Merkmalskombinationen entsprechend Anspruch 1 umrissen. Vorteilhafte Ausgestaltungen sind den Unteransprüchen zu entnehmen.

Der Erfindung liegt die Erkenntnis zugrunde, dass das gesamte Verfahren im Wesentlichen aus der Kombination von drei Verfahrensarten darzustellen ist:
dem Laser- oder Drahterosions-, dem Funkenerosions- und Profil-Räum-Verfahren.

Nachfolgend sind diese Prozesse gemäß ihrer chronologischen Einsatzreihenfolge aufgeführt:
- Herstellung eines Masters mittels Laser- oder Draht-Erosionsverfahren oder anderer Verfahren, wie LIGA-Verfahren etc.
- Herstellung einer Erodier-Elektrode durch ein Umformverfahren (DIN 8583).
- Strukturierung des Räumwerkzeugs durch Senkerosion.
- Räumung von Mikroverzahnungen in Bauteilen (DIN 8589, Teil 5).

Damit können Mikroverzahnungen mit Zahnmodul m < 0,1mm in hochfesten Stählen spanend und mit großen Verzahnungslängen hergestellt werden.

Der gesamte Prozess ermöglicht, dass die Bearbeitungszeit pro Bauteil im Vergleich zu den im Stand der Technik für den Prozess ausschließlich eingesetzten direkten Fertigungsverfahren, wie Drahterosion oder LIGA, drastisch reduziert wird und Mikroverzahnungen mit m < 0,1 mm herstellbar sind. Vollprofil-Räumwerkzeuge weisen komplett umlaufende Schneiden auf.

Durch die in der Erfindung angegebene Verfahrensschrittfolge kann die Fertigungszeit von Bauteilen bis in den Sekundenbereich gesenkt werden. Eine entsprechende Stückzahl korrespondiert damit.

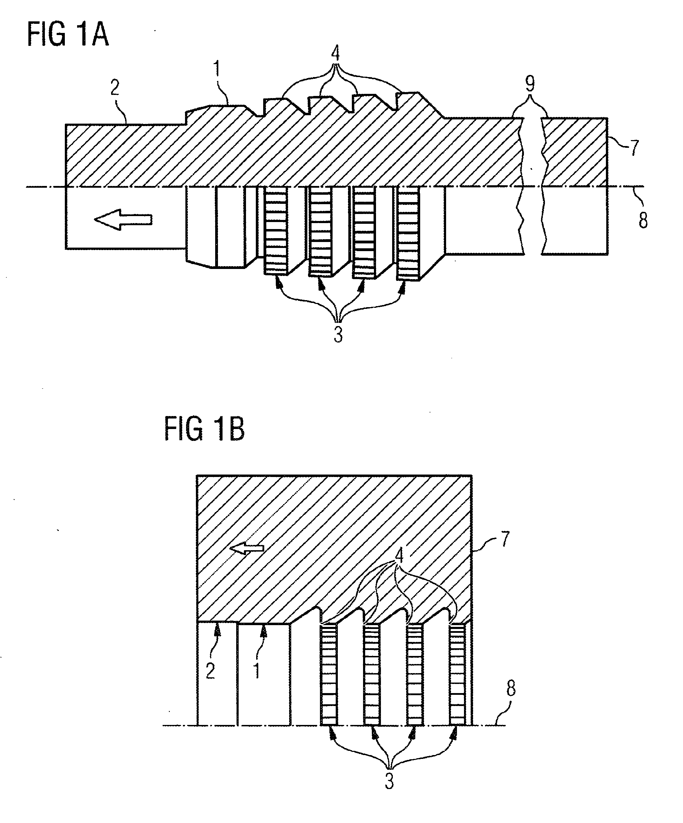

Der Fertigungsprozess zur endgültigen Herstellung von strukturierten Werkstücken oder Bauteilen erfolgt durch Profil-Werkzeuge/Räumwerkzeuge mit Schneidgeometrien wie sie in den Figuren 1A und 1B dargestellt sind. Dabei wird das Profil auf den Schneiden nicht wie derzeit üblich geschliffen. Das Profil wird vielmehr durch einen vorhergehenden Senkerosionsprozess auf dem Räumwerkzeug ausgebildet und danach durch Räumen auf ein Bauteil übertragen. Nur durch diesen Prozess bzw. eine Kombination verschiedener Verfahrensarten sind Mikroverzahnungen in höheren Stückzahlen und mit den Eigenschaften, wie sie oben angegeben sind, erzeugbar.

Der Verfahrensablauf stellt sich insgesamt wie folgt dar:
- Es wird ein Master der Verzahnung durch Laserablation oder Drahterosion, theoretisch auch durch ein LIGA oder Senkerosionsverfahren, erzeugt.
- Mit dem Master wird ein Negativ erzeugt, indem die beiden Teile aneinander geglättet, also umgeformt werden.
- Die geglättete Positiv-Elektrode wird in einem weiteren Schritt dazu benutzt ein Räumwerkzeug funkenerosiv zu strukturieren.
- Das Räumwerkzeug besteht aus mehreren Schneidringen, einer Passung und einer zusätzlichen Passfläche (Passung 2). Diese zweite Passung ist bei einem konventionellen Räumwerkzeug nicht vorhanden aber in diesem Fall für eine hochgenauen Ausrichtung der Elektrode direkt mit der Verzahnungsfläche notwendig.
- Die auf funkenerosive Weise strukturierten Räumschneiden von Schneide zu Schneide weisen ein abnehmendes Schneidvolumen auf. Dies ist wichtig für die Räumung der Mikroverzahnungen und hat zudem Vorteile für die resultierende Oberflächengüte.
- Die wellenförmige Senkelektrode besitzt insgesamt zwei Passungen, die für eine exakte koaxiale Ausrichtung der Elektrode zum Ring notwendig sind.

Im Folgenden werden mit Bezug auf die anliegenden Zeichnungen die Erfindung nicht einschränkende Ausführungsbeispiele beschrieben, wobei im Einzelnen dargestellt wird:
- Figur 1A,B: zeigen Schneidengeometrien, eines
A) Innenprofil-Räumwerkzeugs-Welle und eines
B) Außenprofil-Räumwerkzeugs-Ring,
- Figur 2A,B: zeigen Detailquerschnitte einer Räumwerkzeugschneide abhängig von ihrer Strukturierungsmethode,
A) Schneidengeometrie eines gelaserten Räumwerkzeugs;
B) Schneidengeometrie nach einem Erodierprozess,
- Figur 3A,B: zeigen einen Umformprozess nach DIN 8583 zur Herstellung von Senkerodierwerkzeugen,
- Figur 4A,B: zeigen eine Senkerosion zur Herstellung von Räumwerkzeugen mit den durch die Umformung hergestellten Erodierwerkzeugen.

Durch den erwähnten Senkerosionsprozess erhält das Räumwerkzeug eine strukturierte Schneidengeometrie die im Vergleich zum konventionellen Werkzeug besonders überragende Eigenschaften aufweist:
-- Es sind keine Spanbrechernuten notwendig, da bei einem senkerodierten Vollprofil-Räumwerkzeug kurze Späne und keine umlaufenden Späne entstehen.
-- Das Schneidvolumen sinkt im Vergleich zu einem beispielsweise direkt gelaserten Räumwerkzeugs im Laufe des beschriebenen Schneidprozesses, von Schneide 1 bis 4, wodurch ein Absinken der Zerspanungskräfte und damit bessere Oberflächen und eine längere Standzeit des Werkzeugs erzielt werden.
-- Das Schleifen eines Freiwinkels der Schneide kann entfallen, was die Herstellung des Räumwerkzeugs vereinfacht, da durch den nachfolgenden Erosionsprozess ein Teil der Schneide wieder entfernt wird und damit ein Mikroverzahnungsprofil entsteht.

Der Erodierprozess ermöglicht die Strukturierung von sehr kleinen Durchmessern. Damit können die Außenprofil-Räumwerkzeuge kostengünstig aus einem Teil gefertigt und anschließend strukturiert werden.

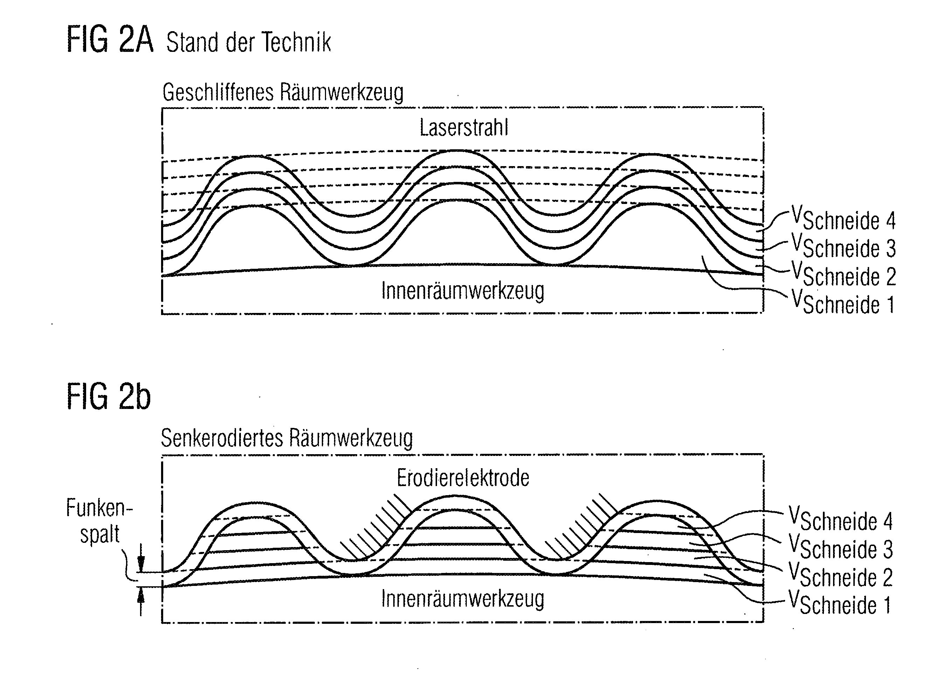

Zur Verdeutlichung zeigen die Figuren 2A,B Detailausschnitte der hergestellten Schneidkanten der Räumwerkzeuge 7 nach unterschiedlichen Fertigungsprozessen wie Lasermaterialabtrag, Figur 2A/Senkerosion, Figur 2B usw.

Damit geben die Figuren 2A,B Räumwerkzeugschneiden 4 wider, in Abhängigkeit von ihrer Strukturierungsmethode.
Fig 2A: Schneidengeometrie eines gelaserten Räumwerkzeugs.
Fig 2B: Schneidengeometrie nach einem Erodierprozess.

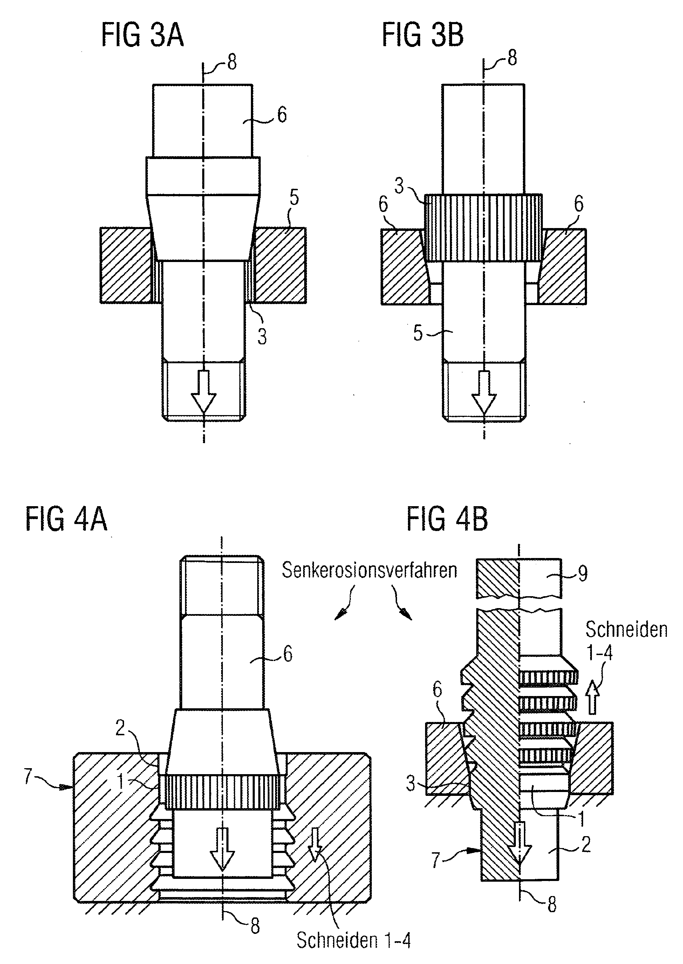

Um eine geeignete Elektrode herstellen zu können wird ein Umformverfahren (DIN 8583) verwendet. Der Prozess soll anhand der Strukturierung eines Außenprofil-Räumwerkzeugs entsprechend der Figuren 3A und 4A erläutert werden. Analog dazu verhält es sich mit der Strukturierung eines Innenprofil-Räumwerkzeugs entsprechend der Figuren 3B und 4B.

Eine Elektrode, meist aus Kupfer, mit einem konisch geformten Bereich wird in dem ersten Schritt durch einen Master 5, meist aus gehärtetem Stahl, durchgezogen. Dabei besitzt der Master eine Mikroverzahnungsstruktur, die sich beim Umformprozess, einer Profilverjüngung, auf die Elektrode überträgt. Der konische Bereich dient zur Selbstzentrierung der Elektrode, damit das Mikroverzahnungsprofil konzentrisch zur Wellenachse 8 aufgebracht werden kann.

Im Vergleich zu konventionellen Räumwerkzeugen benötigen die hier dargestellten Räumwerkzeuge eine zusätzliche Passfläche, bezeichnet mit, 'zweite Passung' 2, die im Falle der Räumwerkzeug-Welle entsprechend Figur 1A für eine exakte koaxiale Ausrichtung zum Erodierwerkzeug-Ring entsprechend Figur 4B notwendig ist;. Die Ausrichtung erfolgt durch einen Vergleich und anschließende Korrektur der Rundlaufabweichung an zwei Stellen d.h. an der 'zweiten Passung' 2 sowie an dem Schaft für die Werkzeugaufnahme 9.

Beim Räumwerkzeug-Ring entsprechend Figur 1B wird die Stirnseite zur koaxialen Ausrichtung verwendet, da das Räumwerkzeug in einer Aufspannung gedreht wird. Die zusätzliche Passfläche, 'zweite Passung', dient zur genauen Zentrierung der Erodierwerkzeug-Welle direkt mit der Verzahnungsfläche vor der Senkerosion entsprechend der Figur 4A. Durch diese erwähnten vor der Profilerzeugung am Räumwerkzeug angewandten Justagestrategien wird eine ausreichende Präzision des Senkerodierprozesses zur Übertragung des Mikroverzahnungsprofils gewährleistet.

Die Kombination aus Laser- oder Drahterosionsverfahren, mit Umformverfahren und Senkerosionsverfahren vom Master bis zum strukturierten Räumwerkzeug ermöglicht eine sehr kostengünstige Fertigung mit anschließender Herstellung von Bauteilen mit entsprechenden Mikroverzahnungen 3 mit Zahnmodulen m < 0,1 mm bei gleichzeitigem großen Durchsatz und wesentlichen größeren Zahnlängen. Damit kann ausgehend von nur einem Master eine sehr große Zahl an Bauteilen mit Mikroverzahnungen hergestellt werden. Die Verfahrensfolge zeichnet sich zudem dadurch aus, dass das Profil der Mikroverzahnung prinzipiell frei wählbar ist und der Fertigungsablauf dadurch nicht beeinflusst wird.

In vielen Applikationen war bisher allein der Fertigungsprozess der Elektroden ein aufwändiger und kostspieliger Vorgang. Durch die Verfahrensweise entsprechend der Erfindung wird dieser Vorgang extrem vereinfacht. Die Vorteile dieses Verfahrens zur Herstellung von Erodierelektroden sind zusammengefasst:
- Kostengünstiger und schneller Prozess in wenigen Sekunden,
- Resultierende sehr gute Oberflächengüte,
- Reproduzierbar und nahezu beliebig oft anwendbar mit Kupfer als Elektrodenmaterial und Master aus gehärtetem Stahl,
- Die Abrasion des eingesetzten Elektrodenmaterials während der Senkerosion ist nicht von Belang da die Verzahnungslänge, im Vergleich mit der zu erodierenden Räumwerkzeuglänge, auf der Elektrode sehr groß ist.

Die auf diese Weise mit einem Mikroverzahnungsprofil versehene Elektrode wird in einem anschließenden Senkerosionsprozess dazu verwendet das Profil auf ein Räumwerkzeug zu übertragen, siehe Figuren 4A,B. Durch den sehr kostengünstigen Herstellprozess kann immer eine Elektrode für die Erosion eines Räumwerkzeugs 7 verwendet werden.

Die auf der Erodierwerkzeug-Welle vorhandene zusätzliche Passung dient in diesem Prozessschritt zur genauen koaxialen Ausrichtung und Zentrierung von Bauteil/Werkstück, hier - Räumwerkzeug-Ring-, und Erodierwerkzeug 6, hier -Welle-, Figur 4A. Beim umgekehrten aber analog verlaufenden Prozess mit einem Erodierwerkzeug-Ring dient die zusätzliche Passung auf der Räumwerkzeug-Welle zur Justierung der Teile Figur 4B. Der weitere Senkerosionsprozess von Räumwerkzeug-Welle und -Ring unterscheidet sich nur in der Wahl der Polaritäten an der Maschine.

Erzielbare Vorteile:
- Kostengünstige Herstellung von Mikroverzahnungen 3;
- Herstellung von Zahnmodulen kleiner 0,1 mm möglich;
- Ein Master 5 pro Bauteilform genügt für die Fertigung extrem großer Serien;
- Sehr viel größere Verzahnungslängen bis in dem mm-Bereich sind möglich;
- Beliebige Verzahnungsformen sind realisierbar;
- Sehr kleine Prozesszeit je Bauteil (bei größeren Stückzahlen);
- Resultierende hohe Oberflächengüte am Werkstück;
- Strukturierung auch einteiliger Außenprofil-Räumwerkzeuge mit sehr kleinen Durchmessern, kleiner als 20 mm, möglich.

## Patentansprüche

1. Verfahren zur Herstellung von Vollprofil-Räumwerkzeugen für die Fertigung von innen- oder aussen liegenden Mikroverzahnungen mit Zahnmodulen < 0,1 mm, bestehend aus folgenden Teilprozessen:
1.1. Einsatz eines Erosions-, Laserablations- oder eines LIGA-Verfahrens zur Herstellung eines Masters (5) eines Räumwerkzeugs in negativer Form mit Mikroverzahnung,
1.2. Einsatz eines Umformverfahrens mit Hilfe des Masters (5) zur Herstellung einer geglätteten positiven Form eines mit einer Mikroverzahnung (3) profilierten Bauteils, welche als Erodierelektrode dient,
1.3. Einsatz eines Senk-Erosionsverfahrens mit der Erodierelektrode aus 1.2. zur Strukturierung eines Profils auf einem Räumwerkzeug in Form einer Mikroverzahnung (3) in negativer Form eines Bauteils, wobei das Räumwerkzeug (7) aus mehreren Schneidringen, einer ersten Passung (1) und einer zusätzlichen zweiten Passung (2) zur genauen Ausrichtung desselben direkt auf die Verzahnungsfläche besteht und wobei die auf erosive Weise strukturierten Räumschneiden von Schneide zu Schneide ein abnehmendes Schneidvolumen aufweisen.

2. Verfahren zur Herstellung von Vollprofil-Räumwerkzeugen nach Anspruch 1, bei dem die innen liegenden Schneiden von Räumwerkzeugen (7) bei Durchmessern kleiner 20 mm in Form eines negativen Mikroverzahnungsprofils hergestellt werden.

3. Verfahren zur Herstellung von Vollprofil-Räumwerkzeugen nach Anspruch 1, bei denen die aussen liegenden Schneiden von Räumwerkzeugen (7) in Form eines negativen Mikroverzahnungsprofils hergestellt werden.

4. Verfahren zur Herstellung von Vollprofil-Räumwerkzeugen nach einem der vorhergehenden Ansprüche, bei dem der Master (5) aus einem, im Vergleich zur Erodierelektrode, wesentlich härteren Material hergestellt wird.

5. Verfahren zur Herstellung von Vollprofil-Räumwerkzeugen nach einem der vorhergehenden Ansprüche, bei dem die Erodierelektrode aus einem, im Vergleich zum Master, wesentlich weicheren, gut elektrisch leitenden Material hergestellt wird.

6. Verfahren zur Herstellung von Vollprofil-Räumwerkzeugen nach einem der vorhergehenden Ansprüche, bei dem die Mikroverzahnungen durch das Verfahren der Senkerosion mit einer einzigen Elektrode auf das Räumwerkzeug übertragen werden.

7. Verfahren zur Herstellung von Vollprofil-Räumwerkzeugen nach einem der vorhergehenden Ansprüche, bei dem Verzahnungen mit Zahnlängen von mindestens 1 mm mit Erodier- oder Räumverfahren in schneller Folge hergestellt werden.

## Claims

1. A method for producing full-profile broaching tools for the manufacture of internal or external micro-toothing structures with tooth modules of < 0.1mm, comprising the following sub-processes:
1.1 Application of an erosion, a laser ablation or LIGA (lithographic and galvano moulding) method for manufacturing a master (5) of a broaching tool in negative form with micro-toothing,
1.2 Application of a moulding method using the master (5) for producing a smoothed positive form of a component profiled with a micro-toothing (3), which is used as an erosion electrode,
1.3 Application of a counter-erosion method with the erosion electrode of 1.2 for structuring a profile on a broaching tool in the form of a micro-toothing (3) in negative form of a component, wherein the broaching tool (7) consists of a plurality of cutting rings, a first fitting (1) and an additional second fitting (2) for the precise alignment of same directly on the toothed surface, and wherein the broaching blades, which are structured in an erosive manner, have a decreasing cutting volume from blade to blade.

2. The method for producing full-profile broaching tools according to Claim 1, in which the inner blades of broaching tools (7) with diameters of less than 20mm are produced in the form of a negative micro-toothing profile.

3. The method for producing full-profile broaching tools according to Claim 1, in which the outer blades of broaching tools (7) are produced in the form of a negative micro-toothing profile.

4. The method for producing full-profile broaching tools according to any of the preceding claims, in which the master (5) is produced from a substantially harder material compared to the erosion electrode.

5. The method for producing full-profile broaching tools according to any of the preceding claims, in which the erosion electrode is produced from a substantially softer material compared to the master.

6. The method for producing full-profile broaching tools according to any of the preceding claims, in which the micro-tooth structures are transferred to the broaching tool by the method of counter-erosion.

7. The method for producing full-profile broaching tools according to any of the preceding claims, in which micro-tooth structures are produced with teeth lengths of at least 1mm with erosion methods or broaching methods.

## Revendications

1. Procédé destiné à la fabrication de broches à profil plein pour la production de microdentures intérieures ou extérieures avec des modules de dent < 0,1 mm composé des processus partiels suivantes :
1.1 Utilisation d'un procédé d'électroérosion, d'ablation au laser ou LIGA pour fabriquer un modèle de référence (5) d'une broche en forme négative avec microdenture.
1.2 Utilisation d'un procédé de déformation à l'aide d'un modèle de référence (5) pour fabriquer une forme positive surfacée d'un composant profilé avec une microdenture (3) qui sert d'électrode d'électroérosion,
1.3 Utilisation d'un procédé d'électroérosion par enfonçage avec l'électrode d'électroérosion du paragraphe 1.2 pour structurer un profil sur une broche sous la forme d'une microdenture (3) en forme négative d'un composant, la broche (7) étant composée de plusieurs anneaux de coupe, d'un premier ajustement (1) et d'un deuxième ajustement (2) supplémentaire pour une orientation précise de ceux-ci directement sur la surface de denture et les tranchants de brochage structurés de manière érosive présentant d'un tranchant à l'autre un volume de coupe décroissant.

2. Procédé destiné à la fabrication de broches à profil plein selon la revendication 1 pour lequel les tranchants intérieurs des broches (7) pour des diamètres inférieurs à 20 mm sont fabriqués sous la forme d'un profil de microdenture négatif.

3. Procédé destiné à la fabrication de broches à profil plein selon la revendication 1 pour lesquels les tranchants extérieurs des broches (7) sont fabriqués sous la forme d'un profil de microdenture négatif.

4. Procédé destiné à la fabrication de broches à profil plein selon une quelconque des revendications précédentes pour lequel le modèle de référence (5) est fabriqué à partir d'un matériau essentiellement plus dur, en comparaison à l'électrode d'électroérosion.

5. Procédé destiné à la fabrication de broches à profil plein selon une quelconque des revendications précédentes pour lequel l'électrode d'électroérosion est fabriquée par comparaison au modèle de référence, dans un matériau bon électroconducteur, essentiellement plus tendre.

6. Procédé destiné à la fabrication de broches à profil plein selon une quelconque des revendications précédentes pour lequel les microdentures sont transmises à la broche par le procédé d'électroérosion par enfonçage avec une électrode unique.

7. Procédé destiné à la fabrication de broches à profil plein selon une quelconque des revendications précédentes pour lequel les dentures avec des longueurs de dent d'au moins 1 mm, sont fabriquées en séquence rapide avec un procédé d'électroérosion ou de brochage.
